Europäisches Patentamt

European Patent Office

Office européen des brevets

(19)

(11) **EP 0 859 267 B1**

(12) **FASCICULE DE BREVET EUROPEEN**

(45) Date de publication et mention
de la délivrance du brevet:
**15.09.2004 Bulletin 2004/38**

(51) Int Cl.[7]: **G02F 1/39**, G02F 1/35,
H04B 10/17, H04B 10/18

(21) Numéro de dépôt: **98400340.0**

(22) Date de dépôt: **13.02.1998**

(54) **Dispositif optique pour l'amplification ou l'inversion de modulation à faible bruit ou la production de lumière calme**

Optische Vorrichtung zur rauscharmen Verstärkung oder Modulationsinversion oder zur Erzeugung stillen Lichts

Optical device for low noise amplification or modulation inversion or the generation of quiet light

(84) Etats contractants désignés:
**DE GB**

(30) Priorité: **18.02.1997 FR 9701880**

(43) Date de publication de la demande:
**19.08.1998 Bulletin 1998/34**

(73) Titulaire: **Avanex Corporation
Fremont, CA 94538 (US)**

(72) Inventeurs:
• **Levenson, Juan Ariel
92120 Montrouge (FR)**
• **Lovering, David James
92130 Issy Les Moulineaux (FR)**

(74) Mandataire: **Haines, Miles John et al
D. Young & Co.
21 New Fetter Lane
London EC4A 1DA (GB)**

(56) Documents cités:
• D.J.LOVERING ET AL.: "Noiseless optical amplification in quasi-phase-matched bulk lithium niobate" OPTICS LETTERS, vol. 21, no. 18, 15 septembre 1996, pages 1439-1441, XP000630824
• J.A.LEVENSON ET AL.: "Reduction of quantum noise in optical parametric amplification" JOURNAL OF THE OPTICAL SOCIETY OF AMERICA B, vol. 10, no. 11, novembre 1993, pages 2233-2238, XP002045090
• M.L.SUNDHEIMER ET AL.: "Large nonlinear phase modulation in quasi-phse-matched KTP waveguides as a result of cascaded second-order processes" OPTICS LETTERS, vol. 18, no. 17, 1 septembre 1993, pages 1397-1399, XP002045091
• Y.MU, C.M.SAVAGE: "Parametric amplifiers in phase-noise-limited optical communications" JOURNAL OF THE OPTICAL SOCIETY OF AMERICA B, vol. 9, no. 1, janvier 1992, pages 65-70, XP002045092
• MARHIC M E ET AL: "Broadband fiber optical parametric amplifiers" OPTICS LETTERS, vol. 21, no. 8, 15 avril 1996, pages 573-575, XP000589927

**Description**

La présente invention se rapporte au domaine du traitement optique de signaux dont l'amplitude ou l'intensité est modulée pour véhiculer de l'information.

D'une manière générale, le traitement de signaux optiques est réalisé par des procédés opto-électroniques ou tout-optiques. Dans le premier cas, les dispositifs analogiques existants possèdent une bande passante limitée et rajoutent du bruit au signal traité. Il existe des répéteurs numériques, mais ceux-ci sont également limités en bande passante, en général complexes, et leur prix est élevé. Les dispositifs tout-optiques, fonctionnant sur la base de mécanismes absorptifs, rajoutent du bruit au signal et sont limités en bande passante. Lorsque l'absorption n'est pas présente, il reste néanmoins le problème de dégradation du rapport signal-sur-bruit. Dans ce qui suit, nous décrivons des solutions connues pour effectuer différents types de traitement envisagés selon l'invention.

Logique optique

Le traitement optique de l'information nécessite la mise en oeuvre de fonctions optiques équivalentes à celles couramment utilisées en électronique. Il existe peu de dispositifs optiques permettant de réaliser de telles fonctions logiques. Par exemple, pour l'inversion d'une modulation, on ne trouve dans la littérature que quelques propositions, basées sur des processus absorptifs (voir F.R. Beyette Jun et al : "Integrated optical inverter using light amplifying optical switch (LAOS)", Electronics Letters, Vol.27, N°6, Mars 1991, pages 497-499, ou Y. Maeda, "Optical signal inverter of erbium-doped yttrium aluminium garnet with red shift of laser diodes", Applied Optics, Vol.33, N°23, Août 1994, pages 5448-5450). Dans le meilleur des cas, le temps de réponse est de quelques nanosecondes, et ne peut pas être réduit à cause du temps de recombinaison des charges photocréées ou du principe même de la boucle d'asservissement.

Il est souhaitable de ne pas mettre en jeu l'absorption de la lumière afin de ne pas être limité par le temps de recombinaison. Il est par ailleurs souhaitable de pouvoir réaliser le traitement en onde progressive. Dans cette configuration, la bande passante n'est pas limitée par la présence d'une cavité optique.

Amplification paramétrique

Un des principaux problèmes associés à l'amplification paramétrique optique est l'intensité du faisceau de pompage nécessaire pour obtenir le processus de transfert d'énergie. Depuis les débuts de l'optique non-linéaire, des efforts importants ont été consacrés au développement de matériaux de plus en plus performants, permettant d'abaisser le seuil de l'interaction non-linéaire. Ceci peut être illustré par les nombreux travaux consacrés à l'accord de phase artificiel (voir M.M. Fejer et al : "Quasi-Phase-Matched Second Harmonic Generation : Tuning and Tolerances", IEEE Journal of Quantum Electronics, Vol. 28, N°11, Novembre 1992, pages 2631-2654).

Une configuration particulièrement intéressante est celle où les deux modes de l'amplificateur paramétrique, usuellement appelés "signal" et "complémentaire" (ou "idler"), sont excités. Son facteur de bruit peut être alors quasiment égal à 1, c'est-à-dire qu'il amplifie sans dégrader le rapport signal-sur-bruit (voir J.A. Levenson et al : "Reduction of quantum noise in optical parametric amplification", Journal of the Optical Society of America B, Vol. 10, 1993, pages 2233-2238).

Une autre approche proposée dans la littérature, appelée "transistor optique", repose sur la génération du second harmonique en présence d'un désaccord de phase entre le fondamental et l'harmonique (voir G. I. Stegeman et al : "Large nonlinear phase shifts in second-order nonlinear-optical processes", Optics Letters, Vol.18, N°1, janvier 1993, pages 13-15). Dans ce cas, la bande passante est limitée par le désaccord de phase. Cette contrainte peut être contournée lorsqu'un signal faible à $2\omega$ est également injecté (voir P. St. J. Russell : "All-optical high gain transistor action using second-order nonlinearities", Electronics Letters, Vol.29, N°13, juin 1993, pages 1228-1229). On note que le principe même du dispositif décrit dans ce dernier document implique un fort transfert d'énergie entre la pompe et le signal, de telle sorte que l'utilisation de la même pompe pour une deuxième fonction est impossible.

Dans leur article "The Improvement of Signal to Noise Ratio with Nonlinear Amplification in Inline Phase-Sensitive Amplifier System" (Proceedings of the OAA Conference, 1996, Monterey, papier SaC5, pages 258-261), A. Takada et al décrivent une expérience de transmission par fibre, dans laquelle la propagation sur une grande longueur de fibre provoque un déphasage non-linéaire par effet Kerr, et un interféromètre de type Mach-Zehnder non-linéaire à fibre réalise une amplification paramétrique dépendante de la phase afin de pallier l'atténuation et les dégradations du signal transmis sur la longue fibre. Ce système opère dans un régime de saturation du gain, ce qui conduit à un reformatage des impulsions optiques, qui à son tour réduit le bruit classique et contribue à diminuer la dégradation du BER (Bit Error Rate ou taux d'erreur binaire) causée par l'amplification classique. Cette amélioration n'est valable que si le bruit quantique est négligeable par rapport au bruit classique ; dans le cas contraire, l'ensemble introduit un excès de bruit qui dégrade le rapport signal-sur-bruit quantique. On note qu'en dehors du contexte de la transmission, ce système ne réalise aucun traitement utile : la raison d'être de l'amplificateur paramétrique est l'atténuation provoquée par la propagation sur une grande distance.

Génération de lumière calme

Un laser parfait monomode produit un faisceau optique dont les fluctuations obéissent à une statistique isotrope, c'est-à-dire que les valeurs du champ électrique selon deux phases perpendiculaires présentent des fluctuations identiques. Le laser est dit parfait en ce sens que la variance de ces deux valeurs de champ, qui sont conjuguées, est à la limite fixée par les relations d'incertitude de Heisenberg. De façon équivalente, le principe de Heisenberg peut être exprimé à l'aide des variables conjuguées que sont le nombre de photons (ou l'énergie, ou l'intensité qui lui sont proportionnelles) et la phase. Dans le cas du laser parfait, la statistique est poissonnienne, c'est-à-dire que le nombre de photons suit une loi de Poisson dont la variance est égale à la valeur moyenne. Tout autre source classique de lumière produit un nombre de photons dont la variance est au moins égale à la moyenne.

Cependant, on a été capable dans certains cas de produire des faisceaux ayant des fluctuations quantiques sub-poissonniennes, c'est-à-dire comportant un nombre de photons dont la variance est inférieure à la valeur moyenne. On parle alors de lumière calme car ses fluctuations d'intensité sont inférieures à la limite du bruit de grenaille ("shot noise"). Une telle lumière peut être obtenue sans violer le principe de Heisenberg au prix d'une certaine augmentation de la variance de la phase, les fluctuations des deux valeurs du champ selon les deux phases perpendiculaires n'étant plus isotropes ("squeezed states").

Différents dispositifs ont été proposés pour générer une lumière calme à partir d'une source laser. Certains dispositifs proposés reposent sur l'effet Kerr optique dans une cavité (voir R.E. Slusher et al : "Observation of squeezed states generated by four-wave mixing in an optical cavity", Physical Review Letters, Vol.55, N°22, Novembre 1985, pages 2409-2412). La bande passante est alors limitée par celle de la cavité (environ 20 MHz). De plus, les fluctuations du faisceau lumineux dues à des sources de bruit classiques (thermiques, mécaniques ...), doivent être quasiment éliminées préalablement.

Une autre catégorie de dispositifs repose sur un effet opto-mécanique : la pression de radiation sur un miroir mobile (voir C. Fabre et al : "Quantum-noise reduction using a cavity with movable mirror", Physical Review A, Vol.49, N°2, février 1994, pages 1337-1343 ; ou A. Heidmann et al : "Photon noise reduction by reflection from a movable mirror" Physical Review A, Vol. 50, N°5, Novembre 1994, pages 4237-4243). Dans ces dispositifs, l'ensemble doit être refroidi à des très basses températures pour augmenter la bande passante, jusqu'à des valeurs qui restent faibles néanmoins (quelques MHz).

Différentes méthodes dans lesquelles on modifie la statistique d'un faisceau laser à l'aide d'une boucle de réaction ont été proposées (voir S. Machida et al : "Observation of sub-poissonian photoelectron statistics in a negative feedback semiconductor laser", Optics Communications, Vol. 57, N°4, Mars 1986, pages 290-296), mais ces méthodes sont également limitées à des très faibles bandes passantes incompatibles avec les besoins pour le traitement de l'information.

Un but de la présente invention est de proposer un mode de traitement optique de signaux modulés en amplitude qui ne dégrade pas le rapport signal-sur-bruit, et qui autorise de très larges bandes passantes de fonctionnement.

L'invention vise encore à proposer une unité de traitement capable d'effectuer différentes fonctions selon les valeurs de certains paramètres de réglage, telles que les fonctions de logique optique, d'amplification optique et/ou de production de lumière calme évoquées ci-dessus.

L'invention propose ainsi une unité de traitement d'un signal optique d'entrée modulé en intensité, sans dégradation du rapport signal/bruit, comprenant :

- des moyens déphaseurs agencés pour recevoir le signal optique d'entrée et lui appliquer un déphasage non-linéaire dépendant de son intensité ; et
- des moyens d'amplification optique paramétrique pour appliquer au signal optique déphasé produit par les moyens déphaseurs une amplification sensible à la phase par interaction avec un faisceau de pompage.

On combine ainsi deux transformations réalisées sur l'état quantique du faisceau lumineux. L'ensemble de ces deux transformations donne lieu à un effet qui ne peut pas être obtenu lorsque seule une des transformations est mise en oeuvre. L'effet conjugué permet d'obtenir une modification désirée de l'intensité. Cette modification est accompagnée d'une distorsion de la répartition du bruit quantique, dont on peut maintenir la projection sur l'axe d'intensité, de sorte que le rapport signal-sur-bruit peut être préservé.

L'amplification dépendante de la phase et le déphasage non-linéaire peuvent être obtenus en utilisant des non-linéarités optiques du second ordre ou du troisième ordre. Le faisceau lumineux constituant le signal d'entrée subit d'abord un déphasage non-linéaire du type Kerr (phase du champ lumineux qui dépend de l'intensité), ce qui crée un déplacement non-linéaire de la phase du faisceau optique. Cette phase non-linéaire est accompagnée d'un changement de l'état quantique du faisceau lumineux. Cet état quantique modifié constitue l'entrée de la deuxième composante de l'unité qui produit une amplification paramétrique dépendante de la phase (selon la phase à l'entrée, le signal est amplifié ou atténué). Cette opération s'accompagne d'une modification du bruit quantique du faisceau lumineux.

L'unité selon l'invention permet d'obtenir l'amplification, l'inversion ou l'égalisation de modulations d'une porteuse dans le régime des petits signaux. Pour utiliser la non-linéarité paramétrique, le dispositif peut être pompé par un faisceau optique intense. Le passage d'une fonction à une autre est obtenu soit par changement de l'intensité moyenne du signal d'entrée, soit par changement d'un décalage de phase entre la pompe et le signal (qui peut être réalisé en ajustant la différence de marche entre la pompe et le signal).

Une particularité importante de l'invention est la possibilité d'obtenir une opération sans dégradation du rapport signal-sur-bruit. Une deuxième particularité est sa grande bande passante. La bande passante de l'unité est limitée soit par celle de l'interaction non-linéaire en régime d'onde progressive, soit par celle du résonateur en régime cavité. Dans le premier cas la bande passante peut dépasser les 600 GHz.

Les longueurs d'onde de fonctionnement sont déterminées par la configuration particulière adoptée : le type d'effet non-linéaire employé pour l'amplification dépendante de la phase et pour le déphasage non-linéaire, et le type de matériau. Par exemple, lorsqu'une non-linéarité du second ordre est utilisée, il est nécessaire de réaliser la condition d'accord de phase entre les trois ondes en interaction (c'est-à-dire que la différence de vitesse des trois ondes dans le milieu ne doit pas conduire à une annulation de l'effet non-linéaire). Cette condition peut être réalisée soit par des méthodes "naturelles" (biréfringence), soit par des méthodes artificielles comme le quasi-accord de phase (inversion périodique de domaines).

L'invention se rapporte également à des procédés de traitement d'un signal optique d'entrée modulé en intensité sans dégradation du rapport signal/bruit, dans lesquels :

- on applique au signal optique d'entrée un déphasage non linéaire dépendant de son intensité ; et
- on amplifie le signal optique déphasé par interaction avec un faisceau de pompage dans un amplificateur optique paramétrique sensible à la phase.

L'un de ces procédés est un procédé d'amplification, dans lequel la gamme d'intensité du signal optique d'entrée et le décalage de phase entre le faisceau de pompage et le signal sont tels que le gain différentiel entre le signal de sortie de l'amplificateur paramétrique et le signal optique d'entrée soit plus grand que 1.

Un autre de ces procédés est un procédé d'inversion de modulation, dans lequel la gamme d'intensité du signal optique d'entrée et le décalage de phase entre le faisceau de pompage et le signal sont tels que le gain différentiel entre le signal de sortie de l'amplificateur paramétrique et le signal optique d'entrée soit négatif.

Un troisième de ces procédés est un procédé de production de lumière calme dans lequel la gamme d'intensité du signal optique d'entrée et le décalage de phase entre le faisceau de pompage et le signal sont tels que les fluctuations quantiques du signal de sortie de l'amplificateur paramétrique soient sub-poissonniennes. Une telle lumière calme peut notamment être observée dans des cas où le gain différentiel entre le signal de sortie de l'amplificateur paramétrique et le signal optique d'entrée est proche de 0.

D'autres particularités et avantages de la présente invention apparaîtront dans la description ci-après d'exemples de réalisation non limitatifs, en référence aux dessins annexés, dans lesquels :

- la figure 1 est un schéma de principe d'une unité de traitement optique selon l'invention ;
- la figure 2 est un graphique montrant les variations de l'intensité du signal (a) et du bruit (b) à la sortie en fonction de l'intensité du signal à l'entrée dans une unité selon l'invention ;
- les figures 3 et 4 sont des graphiques correspondant à celui de la figure 2 et montrant respectivement les variations du gain en régime de petits signaux et celles du facteur de bruit ;
- la figure 5 est un graphique intensité de sortie/intensité d'entrée illustrant une façon de sélectionner la fonction assurée au moyen d'un faisceau de contrôle ;
- la figure 6 est un schéma montrant des moyens de superposition et d'annulation du faisceau de contrôle ;
- les figures 7 à 12 sont des graphiques illustrant l'influence de la gamme d'intensité du signal d'entrée et de la phase du faisceau de pompage sur les fonctions assurées par une unité selon l'invention ; et
- les figures 13 à 15 sont des vues schématiques de matériaux non-linéaires employés dans des unités selon l'invention.

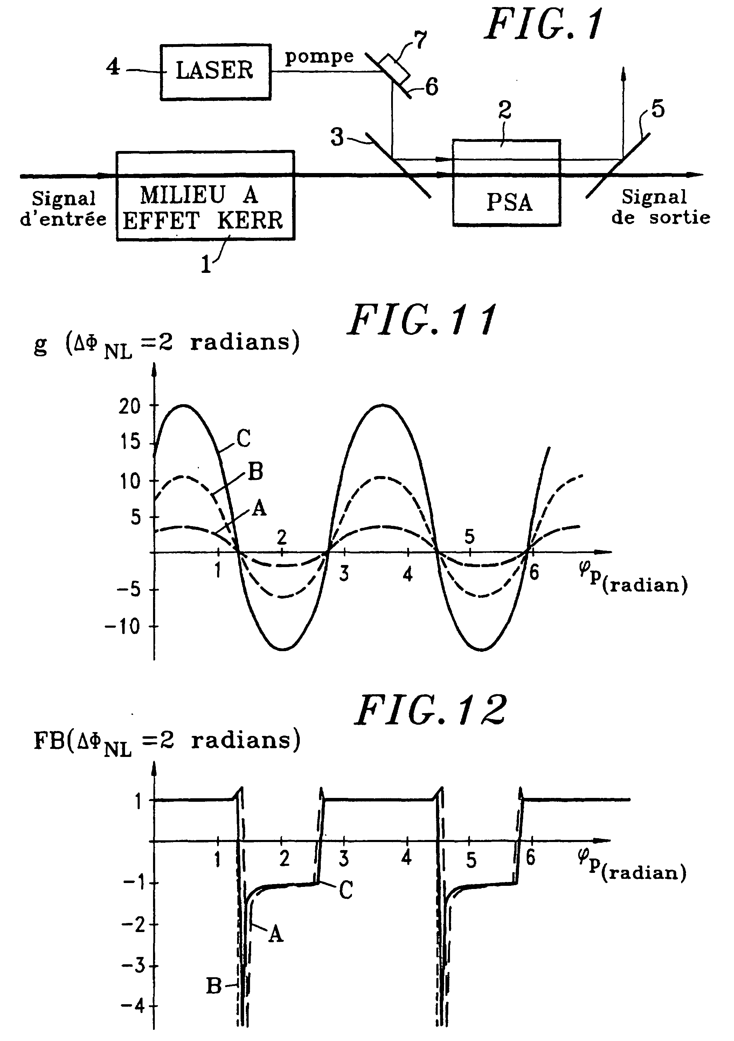

L'unité de traitement optique représentée sur la figure 1 comporte deux parties principales 1, 2 successivement traversées par le signal optique modulé en intensité.

La première partie est un milieu 1 auquel est présenté le signal optique d'entrée, et qui produit un déphasage non-linéaire $\Delta\Phi_{NL}$ dépendant de l'intensité $I_s$ du signal d'entrée. Ce milieu 1 est transparent à la longueur d'onde de fonctionnement, c'est-à-dire qu'il ne provoque pratiquement aucune atténuation du signal.

Comme indiqué sur la figure 1, le déphasage non-linéaire peut être produit par l'effet Kerr qui résulte d'une non-linéarité du troisième ordre. L'expression du déphasage non-linéaire est alors de la forme

$$\Delta\Phi_{NL} = 2\pi n_S(z/\lambda_S)I_S \qquad (1)$$

où $\lambda_s$ est la longueur d'onde du signal, $n_s$ l'indice non-linéaire à cette longueur d'onde, et z la longueur de propagation dans le milieu 1.

Un exemple d'un tel milieu 1 à effet Kerr est une fibre en silice pour laquelle l'indice non-linéaire est $n_s \simeq 3,2.10^{-20}$ m$^2$W$^{-1}$ à une longueur d'onde $\lambda_s$=1,054 µm (voir G.P. Agrawal : "Nonlinear Fiber Optics", Academic Press, 1989). Par exemple, un déphasage $\Delta\Phi_{NL}$ de 2 radians peut être obtenu avec z=50m de fibre lorsque le signal d'entrée a une puissance-crête de 10W, ce qui correspond à une puissance moyenne d'environ 20 mW si le signal provient d'une source laser à blocage de modes, ou d'environ 10 µW si le signal provient d'une source laser déclenchée à blocage de modes.

On note que l'effet Kerr n'est pas le seul effet physique capable de produire le déphasage non-linéaire dans le milieu 1. Un déphasage de la même forme (formule (1)) peut être notamment être obtenu, de manière plus efficace, avec une cascade de non-linéarités du second ordre dans un matériau quasi-accordé en phase, tel que le niobate de lithium (LiNbO$_3$) (voir P. Vidakovic et al : "Large Nonlinear Phase Shift Due to Cascaded $\chi^{(2)}$ in Quasi-Phase-Matched Bulk LiNbO$_3$", article à paraître dans la revue Optics Letters le 1er mars 1997), ou le titanyl phosphate de potassium (KTiOPO$_4$ ou KTP) (voir M.L. Sundheimer et al : "Large Nonlinear Phase Modulation in Quasi-Phase-Matched KTP Waveguides as a Result of Cascaded Second-Order Processes", Optics Letters, Vol. 18, N° 17, Septembre 1993, page 1397-1399). L'indice non-linéaire est alors $n_S$=2,4.10$^{-17}$ m$^2$W$^{-1}$, de sorte qu'un déphasage $\Delta\Phi_{NL}$ de 2 radians peut être obtenu par exemple avec z=1cm de matériau et une puissance-crête de 66 W, ce qui correspond à une puissance moyenne d'environ 130 mW si le signal provient d'une source laser à blocage de modes, ou d'environ 60 µW si le signal provient d'une source laser déclenchée à blocage de modes.

La seconde partie de l'unité de traitement est un amplificateur sensible à la phase (PSA) 2, dont l'entrée reçoit le signal déphasé délivré par le milieu 1. A l'entrée de l'amplificateur 2, un coupleur 3 pouvant consister en une lame dichroique comme dans l'exemple simple schématisé sur la figure 1, superpose au signal déphasé un faisceau de pompage issu d'une source laser 4. Le faisceau de pompage et le signal traversent un milieu non-linéaire transparent où se produit le transfert d'energie, et en sortie duquel un autre coupleur 5 sépare le faisceau de pompage du signal amplifié. Le faisceau de pompage est de pulsation 2ω, où ω est égal à, ou très proche de, $\omega_s$=2πc/$\lambda_s$.

On sait que pour que l'amplificateur 2 soit sensible à la phase, il est nécessaire que ses deux modes (signal et complémentaire) soient excités.

Le gain G d'un amplificateur paramétrique sensible à la phase dépend de la non-linéarité du milieu employé, de la longueur z d'interaction dans ce milieu, de l'intensité $I_p$ du faisceau de pompage, et d'une phase relative θ du faisceau de pompage par rapport au signal d'entrée de l'amplificateur qui excite ses deux modes. Par exemple, dans le cas d'une non-linéarité du second ordre $\chi^{(2)}$ dans un cristal de type II (voir l'article précité de J.A. Levenson et al) :

$$G = \cosh(2\chi^{(2)}\sqrt{I_\rho}z) + \sinh(2\chi^{(2)}\sqrt{I_\rho}z)\cos 2\theta \quad (2)$$

Pour θ=0, le gain G est maximal, et appelé ci-après gain paramétrique $G_0$. Dans l'exemple de la relation (2), il est donné par :

$$G_0 = \exp(2\chi^{(2)}\sqrt{I_\rho}z) \quad (3)$$

Si le milieu non-linéaire est de type I, ce qui est le cas des cristaux quasi-accordés en phase, les deux modes de l'amplificateur sont de même polarisation. Dans un milieu de type I dégénéré en ω, les deux modes sont en outre de même pulsation $\omega \approx \omega_s$, et l'amplificateur est toujours sensible à la phase. C'est le cas du LiNbO$_3$ ou du KTP quasi-accordé en phase. Dans le cas du LiNbO$_3$, une interaction pompe/signal sur une longueur z=1 cm permet d'obtenir un gain paramétrique $G_0$=4 avec un faisceau de pompage de longueur d'onde $\lambda_s$/2=527 nm ayant une puissance-crête de l'ordre de 250 W, correspondant à une puissance moyenne d'environ 250 µW si la source 4 est un laser déclenché à blocage de modes (voir D.J. Lovering et al : "Noiseless Optical Amplification in Quasi-Phase-Matched Bulk Lithium Niobate", Optics Letters, Vol.21, N°18, Septembre 1996, pages 1439-1441).

Si le milieu de type I n'est pas dégénéré en ω, les deux modes sont de pulsations différentes $\omega_1$ et $\omega_2$ avec $\omega_1+\omega_2=2\omega$, et l'amplificateur pourra être sensible à la phase si la largeur spectrale du signal d'entrée couvre les pulsations $\omega_1$ et $\omega_2$.

Dans un milieu non-linéaire de type II, les deux modes ont des directions de polarisation perpendiculaires. L'amplificateur est sensible à la phase lorsque le signal déphasé fourni à son entrée est polarisé à 45° par rapport à ces deux directions de polarisation.

Dans le cas où l'amplificateur 2 est précédé par le milieu 1 introduisant le déphasage non-linéaire $\Delta\Phi_{NL}$, la phase relative θ dépend de l'intensité $I_s$ du signal d'entrée de l'unité de traitement :

$$\theta = \Phi_0 - \Delta\Phi_{NL} \quad (4)$$

où $\Phi_0$ représente le décalage de phase entre le faisceau de pompage et le signal d'entrée de l'amplificateur en l'absence de déphasage non-linéaire (quand $I_s$ tend vers zéro dans la formule (1)). On voit que l'association en série des deux effets non-linéaires pourra ainsi conférer des propriétés particulières au signal de sortie de l'unité.

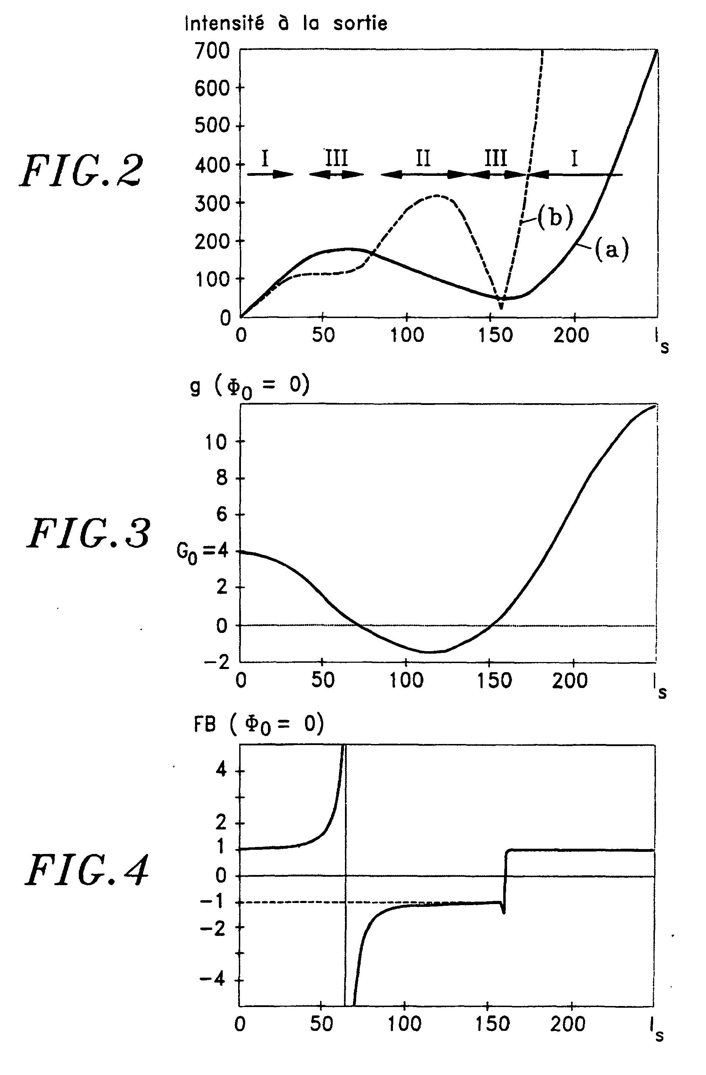

La figure 2 représente, avec des unités arbitraires, les variations de l'intensité du signal de sortie de l'unité (courbe (a)) et celles de l'intensité du bruit quantique de sortie (courbe (b) en fonction de l'intensité $I_s$ du signal d'entrée, dont la statistique est poissonnienne. Ces variations ont été obtenues par une simulation dans laquelle le décalage de phase était $\Phi_0=0$ et le gain paramétrique $G_0=4$. La courbe de la figure 3 correspond à la dérivée de la courbe (a) de la figure 2, c'est-à-dire au gain différentiel g de l'unité de traitement, ou gain en régime de petits signaux ($I_s$ de la forme $I_s=I_0+i(t)$, où i(t) est la modulation porteuse d'information avec $i(t)<<I_0$). La courbe de la figure 4 représente les variations correspondantes du facteur de bruit FB en régime de petits signaux, défini par $FB=(IB_s/IB_e)/g$, où $IB_s$ et $IB_e$ désignent respectivement les intensités du bruit en sortie et en entrée de l'unité. Ce facteur de bruit FB caractérise la tendance de l'unité à ajouter du bruit au signal qu'elle traite. On constate différentes régions de fonctionnement :

    I. amplification (g>1) ;
    II. inversion de modulation (g<1) ;
    III. génération de lumière calme (g≈0).

Dans les régions I et II, le facteur de bruit en régime de petits signaux est proche de 1 (en valeur absolue). Ceci montre que, contrairement aux dispositifs optiques analogiques classiques, l'unité selon l'invention fonctionne sans apport de bruit supplémentaire.

Dans les régions III, où le gain différentiel g est proche de zéro, le facteur de bruit FB n'est pas un paramètre significatif. La saturation du gain s'accompagne d'un infléchissement de la puissance du bruit, comme le montre la figure 2, de sorte qu'on pourra observer des fluctuations d'intensité sub-poissonniennes dans le signal de sortie si le signal d'entrée de l'unité est issu d'une source, telle qu'un laser classique, émettant de la lumière avec une statistique poissonnienne. L'unité délivre alors de la lumière calme, qu'on peut observer au moyen d'un analyseur de spectre.

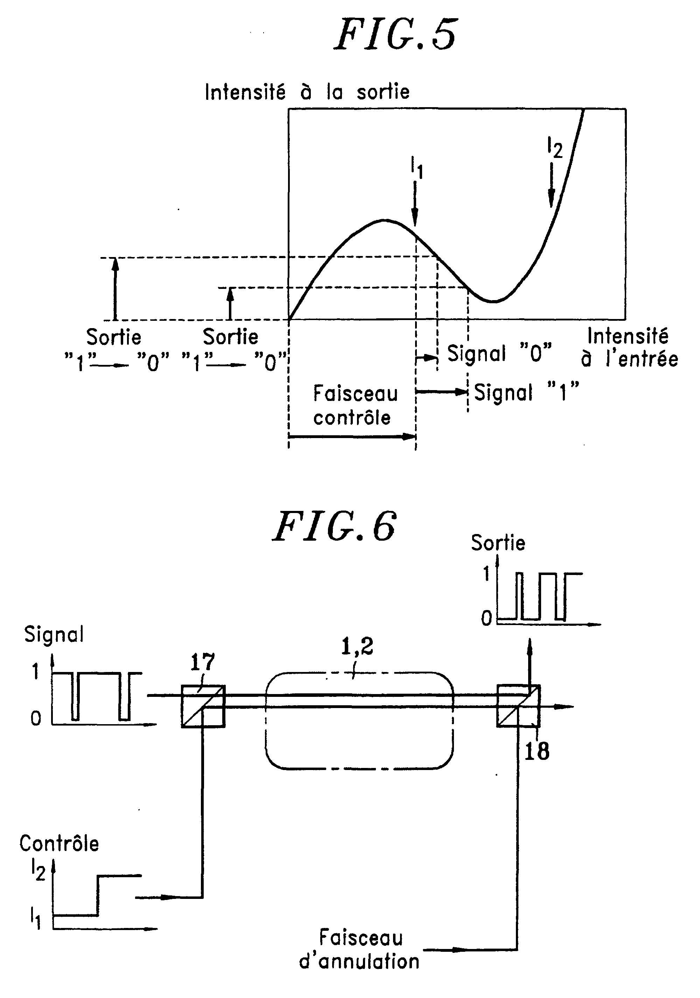

Les figures 5 et 6 illustrent comment on peut passer d'une région de fonctionnement à une autre, c'est-à-dire sélectionner le type de traitement effectué par l'unité, en réglant la gamme d'intensité du signal d'entrée. Un faisceau de contrôle, de longueur d'onde $\lambda_s$ et d'intensité programmable, est superposé au signal à traiter au moyen d'un coupleur 17 à l'entrée du milieu 1 produisant le déphasage non-linéaire, et un faisceau d'annulation est éventuellement injecté dans l'unité par la sortie de l'amplificateur sensible à la phase 2 au moyen d'un autre coupleur 18 pour supprimer le faisceau de contrôle à la sortie. Le rapport signal-sur-bruit est alors préservé lorsque la réflectivité du coupleur 18 est élevée (voir M. Kitagawa et al : "Number-phase minimum-uncertainty state with reduced number uncertainty in a Kerr nonlinear interferometer", Physical Review A, Vol. 34, n° 5, Novembre 1986, pages 3974-3988). Dans l'exemple représenté, l'unité 1,2 fonctionne en inverseur de modulation lorsque le faisceau de contrôle a l'intensité $I_1$, et en amplificateur lorsqu'il a l'intensité $I_2$.

Une autre possibilité pour sélectionner le traitement effectué par l'unité selon l'invention consiste en un réglage du décalage de phase $\Phi_0$. Ce réglage de $\Phi_0$ décale la phase θ à laquelle est sensible l'amplificateur 2 (cf. relation (4)). Le décalage $\Phi_0=\phi_p-\phi_s$ est la différence entre la phase $\phi_p$ de la pompe et la phase $\phi_s$ du signal à l'entrée de l'amplificateur en l'absence de déphasage non-linéaire ($I_s\rightarrow0$), prises par rapport à une référence commune arbitraire. Le décalage $\Phi_0$ peut donc être réglé en jouant sur le trajet optique (distances parcourues et/ou indices linéaires des milieux traversés) soit du faisceau de pompage soit du signal jusqu'à l'entrée de l'amplificateur.

Par exemple, la phase $\phi_p$ de la pompe peut être ajustée simplement à l'aide d'un miroir 6 (figure 1) monté sur un actionneur piézoélectrique 7 dans le trajet suivi par le faisceau de pompage entre sa source 4 et l'amplificateur 2. L'actionneur 7 peut être commandé par un circuit d'asservissement pour que le traitement souhaité soit accompli.

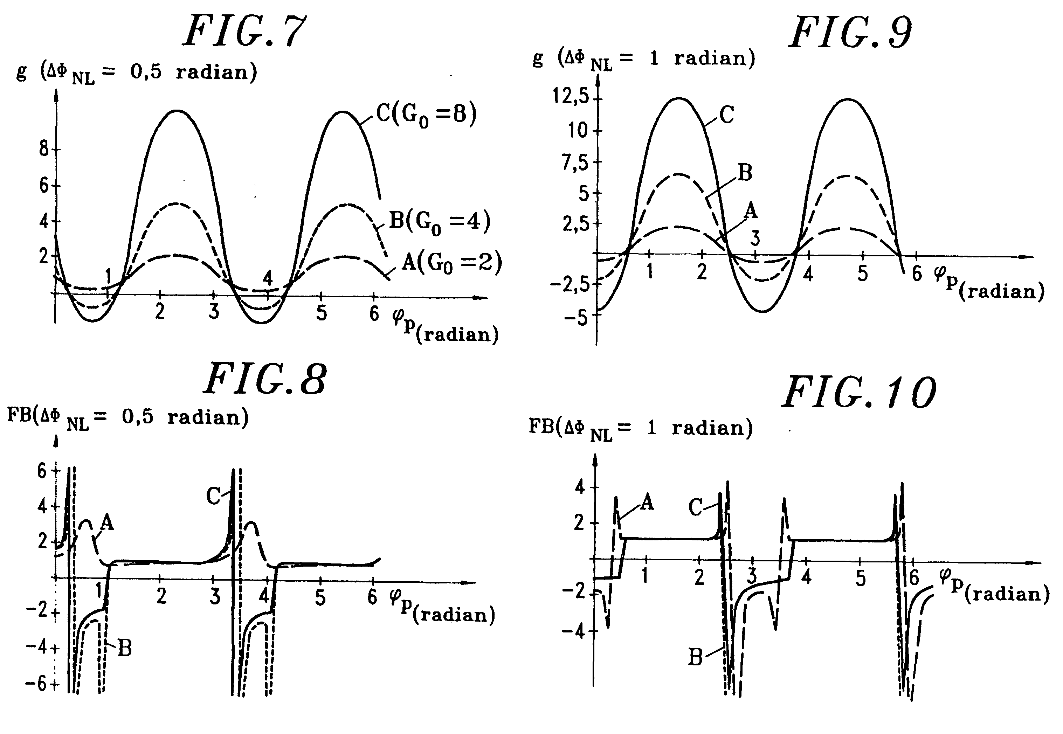

Les figures 7 et 8 montrent le gain différentiel g et le facteur de bruit FB en régime de petits signaux en fonction de la phase $\phi_p$ de la pompe dans une configuration donnée ($\phi_s$ fixée) lorsque l'intensité du signal d'entrée (à laquelle s'ajoute l'intensité du petit signal modulant) correspond à un déphasage non linéaire $\Delta\Phi_{NL}$ de 0,5 radian. Les courbes A, B et C ont été obtenues par simulation pour des gains paramétriques de $G_0=2$, $G_0=4$ et $G_0=8$, respectivement. On voit que le réglage de la phase $\phi_p$ permet de choisir un traitement en amplification (g>1), en inversion de modulation (g<0) ou en production de lumière calme (g≈0). Le facteur de bruit est très proche de 1 en amplification (figure 8), notamment pour les gains différentiels les plus élevés.

Les figures 9 et 10 (respectivement 11 et 12) sont des graphiques obtenus dans les mêmes conditions que ceux des figures 7 et 8, mais pour une intensité du signal d'entrée donnant lieu à un déphasage non-linéaire $\Delta\Phi_{NL}$ de 1 radian (respectivement 2 radians). Lorsque $\Delta\Phi_{NL}$ augmente, les gains différentiels observés deviennent plus importants, les gains différentiels observés en inversion se rapprochent de ceux observés en amplification simple, et le facteur de bruit est de plus en plus proche de l'idéal |FB|=1 en amplification mais aussi en inversion de modulation.

Si la phase réglée est celle $\phi_s$ du signal optique déphasé à l'entrée de l'amplificateur 2, ce qui est équivalent, ce réglage peut être effectué soit en amont, soit en aval du milieu déphaseur 1, par exemple au moyen d'un ou plusieurs miroirs mobiles.

Dans tous les cas, l'unité de traitement selon l'invention ne met pas en jeu d'absorption lumineuse, de sorte qu'on obtient une bande passante très élevée. Lorsque l'un au moins des deux effets non-linéaires est réalisé dans un résonateur optique, la présence de la cavité limite alors la bande passante. Cette limitation dépend du facteur de qualité de la cavité. Dans un tel cas, la bande passante maximale ne dépassera généralement pas quelques dizaines de MHz. Lorsque l'unité de traitement est réalisée en configuration d'onde progressive, la valeur de cette bande passante dépend essentiellement de la configuration et des matériaux non-linéaires adoptés. Elle se situe alors dans l'échelle de quelques centaines de GHz.

Une unité selon la présente invention peut être hybride ou monolithique. Elle peut être fabriquée par la mise en série de deux matériaux différents (par exemple séléniure de zinc ZnSe pour le déphasage non-linéaire suivi de KTP pour l'amplification paramétrique sensible à la phase) ou, de préférence, à partir d'un seul matériau capable de produire les deux effets non-linéaires. Ceci est possible à partir de matériaux organométalliques, semiconducteurs, organiques et de verres.

On peut ainsi envisager une grande variété de réalisations. Une famille de ces réalisations faisant appel à un contrôle de fonctionnalité par l'intensité du signal peut être conçue d'une manière très compacte et stable. Le décalage de phase $\Phi_0$ entre la pompe et le signal est alors fixé, une fois pour toutes, "mécaniquement" lors de la réalisation du dispositif, par le contrôle des différentes longueurs intervenantes. Dans le mode de fonctionnement où la fonctionnalité est sélectionnable par réglage du décalage de phase $\Phi_0$ entre la pompe et le signal, un système d'asservissement de ce décalage de phase permettra le choix de l'intensité de sortie et la commutation entre les différents modes de fonctionnement. La phase peut alors être contrôlée par des méthodes mécaniques (des miroirs montés sur cales piézoélectriques) ou par des méthodes optoélectroniques.

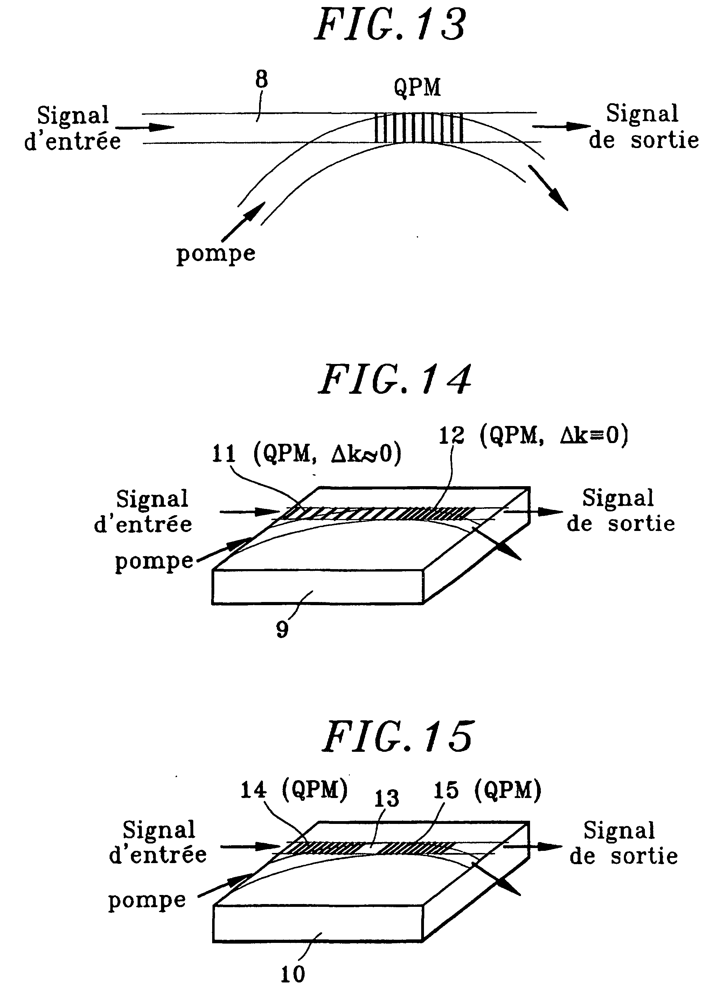

Des fibres en silice peuvent être employées pour constituer les deux parties d'une unité selon l'invention. De telles fibres optiques sont couramment utilisées pour obtenir un déphasage non-linéaire de type Kerr, par exemple dans les "boucles de Sagnac". L'indice non-linéaire accumulé sur une longueur de 100 mètres permet d'obtenir des déphasages de l'ordre de $\pi$ pour de relativement faibles puissances de signal. Par ailleurs, ces mêmes fibres peuvent présenter une non-linéarité du second ordre lorsqu'elles sont traitées thermiquement et/ou électriquement pour obtenir un quasi-accord de phase (QPM) (voir P.G. Kazansky et al : "High Second-Order Nonlinearities Induced in Lead Silicate Glass by Electron Beam Irradiation", Optics Letters, Vol. 18, No. 9, Mai 1993, pages 693-695). Une réalisation possible représentée sur la figure 13 consiste en une fibre 8 de 100 mètres dont les 10 derniers centimètres sont traités pour obtenir la non-linéarité du second ordre. Un coupleur permet d'injecter et d'extraire le faisceau de pompage dans le milieu non-linéaire du second ordre.

Les figures 14 et 15 montrent schématiquement deux cristaux monolithiques 9, 10 d'un matériau non-linéaire tel que LiNbO$_3$ pouvant être le siège des deux effets mis en série selon l'invention.

Soit $\Delta$k la différence de vecteurs d'onde entre la pompe et la combinaison des ondes portant l'information. L'amplification paramétrique a été démontrée dans le niobate de lithium quasi-accordé en phase ($\Delta$k=0, voir l'article précité de D.J. Lovering et al.). Un effet de cascade non-linéaire, équivalent à l'effet Kerr, a d'autre part été démontré lorsqu'un léger désaccord de phase ($\Delta$k≈0) est réalisé dans le quasi-accord de phase (article précité de P. Vidakovic et al.). Une réalisation possible représentée sur la figure 14, consiste à réaliser dans le cristal 9 un guide de 2 centimètres dont la première moitié 11 est légèrement désaccordée en phase et la deuxième moitié 12 est parfaitement accordée en phase ($\Delta$k=0). Le faisceau de pompage peut être injecté à l'entrée du guide ou par un coupleur implanté dans la deuxième partie de celui-ci.

La figure 15 présente une autre variante, constituée d'un tronçon 13 de matériau sans accord de phase mis en sandwich entre deux tronçons 14, 15 accordés en phase ($\Delta$k=0). Le tronçon non accordé en phase ($\Delta$k≠0), d'une longueur égale à la moitié de la longueur de cohérence($\pi/\Delta$k), permet d'obtenir le déphasage non-linéaire. La longueur du dernier tronçon 15 est telle qu'il permet l'amplification paramétrique lorsqu'un faisceau de pompage est injecté à l'aide d'un coupleur.

## Revendications

1. Unité de traitement d'un signal optique d'entrée modulé en intensité sans dégradation du rapport signal/bruit , comprenant, en série:

   - des moyens déphaseurs (1) agencés pour recevoir le signal optique d'entrée et lui appliquer un déphasage non-linéaire ($\Delta\Phi_{NL}$) dépendant de son intensité ($I_s$) ; et
   - des moyens d'amplification optique paramétrique (2) pour appliquer au signal optique déphasé produit par les moyens déphaseurs une amplification sensible à la phase par interaction avec un faisceau de pompage.

2. Unité selon la revendication 1, dans laquelle les moyens déphaseurs (1) et les moyens d'amplification optique paramétrique (2) sont dans deux portions distinctes d'un même élément monolithique (8 ; 9; 10).

3. Unité selon la revendication 2, dans laquelle ledit élément monolithique est une fibre optique (8).

4. Unité selon la revendication 2, dans laquelle ledit élément monolithique est un cristal de matériau non-linéaire ayant au moins une région (11, 12 ; 14, 15) quasi-accordée en phase.

5. Unité selon l'une quelconque des revendications 1 à 4, comprenant en outre des moyens de sélection de fonction par réglage de la gamme d'intensité du signal optique d'entrée.

6. Unité selon la revendication 5, dans lequel lesdits moyens de sélection comprennent des moyens (17) pour superposer au signal optique d'entrée un faisceau de contrôle de même longueur d'onde et d'intensité programmable.

7. Unité selon l'une quelconque des revendications 1 à 6, comprenant en outre des moyens (6, 7) de sélection de fonction par réglage d'un décalage de phase ($\Phi_0$) entre le faisceau de pompage et le signal déphasé à l'entrée des moyens d'amplification optique paramétrique (2).

8. Unité selon la revendication 7, dans laquelle lesdits moyens de sélection par réglage du décalage de phase comprennent au moins un miroir mobile (6) sur lequel se réfléchit le faisceau de pompage le signal optique d'entrée ou le signal optique déphasé.

9. Procédé d'amplification d'un signal optique d'entrée modulé en intensité sans dégradation du rapport signal/bruit, dans lequel :

   - on applique au signal optique d'entrée un déphasage non-linéaire ($\Delta\Phi_{NL}$) dépendant de son intensité ; et
   - on amplifie le signal optique déphasé par interaction avec un faisceau de pompage dans un amplificateur optique paramétrique sensible à la phase (2),

   la gamme d'intensité ($I_s$) du signal optique d'entrée et un décalage de phase ($\Phi_0$) entre le faisceau de pompage et le signal optique déphasé étant tels que le gain différentiel (g) entre le signal de sortie de l'amplificateur paramétrique et le signal optique d'entrée soit plus grand que 1.

10. Procédé d'inversion de la modulation d'un signal optique d'entrée modulé en intensité sans dégradation du rapport signal/bruit, dans lequel :

   - on applique au signal optique d'entrée un déphasage non-linéaire ($\Delta\Phi_{NL}$) dépendant de son intensité ; et
   - on amplifie le signal optique déphasé par interaction avec un faisceau de pompage dans un amplificateur optique paramétrique sensible à la phase (2),

   la gamme d'intensité ($I_s$) du signal optique d'entrée et un décalage de phase ($\Phi_0$) entre le faisceau de pompage et le signal optique déphasé étant tels que le gain différentiel (g) entre le signal de sortie de l'amplificateur paramétrique et le signal optique d'entrée soit négatif.

11. Procédé de production de lumière calme sans dégradation du rapport signal/bruit à partir d'un signal optique d'entrée issu d'une source laser dans lequel :

   - on applique au signal optique d'entrée un déphasage non-linéaire ($\Delta\Phi_{NL}$) dépendant de son intensité ; et
   - on amplifie le signal optique déphasé par interaction avec un faisceau de pompage dans un amplificateur optique paramétrique sensible à la phase (2),

   la gamme d'intensité ($I_s$) du signal optique d'entrée et un décalage de phase ($\Phi_0$) entre le faisceau de pompage et le signal optique déphasé étant tels que les fluctuations quantiques du signal de sortie de l'amplificateur paramétrique soient subpoissonniennes.

12. Procédé selon la revendication 11, dans lequel ladite gamme d'intensité ($I_s$) et ledit décalage de phase ($\Phi_0$) sont tels que le gain différentiel (g) entre le signal de sortie de l'amplificateur paramétrique et le signal optique d'entrée soit proche de 0.

**Patentansprüche**

1. Einheit zur Behandlung eines intensitätsmodulierten optischen Eingangssignals ohne Verschlechterung des Signal/Rausch-Verhältnisses, die nacheinander aufweist:

   - Phasenverschiebungsmittel (1), die so angeordnet sind, daß sie das optische Eingangssignal empfangen und in Abhängigkeit von dessen Intensität ($I_s$) eine nicht-lineare Phasenverschiebung ($\Delta\Phi_{NL}$) einfügen; und
   - Mittel (2) für die parametrische optische Verstärkung, um in das phasenverschobene optische Signal, welches von den Phasenverschiebungsmitteln erzeugt wurde, eine phasenempfindliche Verstärkung durch Wechselwirkung mit einem Pumpstrahl einzufügen.

2. Einheit nach Anspruch 1, bei der sich die Phasenverschiebungsmittel (1) und die Mittel (2) für die parametrische optische Verstärkung in zwei verschiedenen Abschnitten desselben monolithischen Elements (8, 9, 10) befinden.

**3.** Einheit nach Anspruch 2, bei der das monolithische Element eine optische Faser (8) ist.

**4.** Einheit nach Anspruch 2, bei der das monolithische Element ein aus nicht-linearem Material bestehender Kristall ist, der zumindest eine Region (11, 12; 14, 15) aufweist, die quasiphasenangepaßt ist.

**5.** Einheit nach einem der Ansprüche 1 bis 4, die außerdem Funktions-Auswahlmittel durch Steuerung des Intensitätsbereichs des optischen Eingangssignals aufweist.

**6.** Einheit nach Anspruch 5, bei der die Auswahlmittel Mittel (17) zum Überlagem des optischen Eingangssignals mit einem Steuerstrahl derselben Wellenlänge und von programmierbarer Intensität aufweisen.

**7.** Einheit nach einem der Ansprüche 1 bis 6, die weiterhin Funktions-Auswahlmittel (6, 7) aufweist durch Steuerung einer Phasenverschiebung ($\Phi_0$) zwischen dem Pumpstrahl und dem phasenverschobenen Signal am Eingang der parametrischen optischen Verstärkungsmittel (2).

**8.** Einheit nach Anspruch 7, bei der die Auswahlmittel durch Steuern der Phasenverschiebung mindestens einen beweglichen Spiegel (6) aufweisen, an dem der Pumpstrahl, das optische Eingangssignal oder das phasenverschobene optische Signal reflektiert wird.

**9.** Verfahren zur Verstärkung eines intensitätsmodulierten optischen Eingangssignals ohne Verschlechterung des Signal/Rausch-Verhältnisses, bei welchem:

- man eine nicht-lineare Phasenverschiebung ($\Delta\Phi_{NL}$) in das optische Eingangssignal in Abhängigkeit von dessen Intensität einfügt, und
- man das phasenverschobene optische Signal durch Wechselwirkung mit einem auf die Phase (2) empfindlichen parametrischen optischen Verstärker verstärkt,

  wobei der Intensitätsbereich ($I_s$) des optischen Eingangssignals und eine Phasenverschiebung ($\Phi_0$) zwischen dem Pumpstrahl und dem phasenverschobenen optischen Signal dergestalt sind, daß die differentielle Verstärkung (g) zwischen dem Ausgangssignal des parametrischen Verstärkers und dem optischen Eingangssignal größer als 1 ist.

**10.** Verfahren zur Inversion der Modulation eines intensitätsmodulierten optischen Eingangssignals ohne Verschlechterung des Signal/Rausch-Verhältnisses, wobei:

- man eine nicht-lineare Phasenverschiebung ($\Delta\Phi_{NL}$) in das optische Eingangssignal in Abhängigkeit von dessen Intensität einfügt; und man
- das phasenverschobene optische Signal durch Wechselwirkung mit einem Pumpstrahl in einem auf die Phase (2) empfindlichen parametrischen optischen Verstärker verstärkt,

  wobei der Intensitätsbereich ($I_s$) des optischen Eingangssignals und eine Phasenverschiebung ($\Phi_0$) zwischen dem Pumpstrahl und dem phasenverschobenen optischen Signal dergestalt sind, daß die differentielle Verstärkung (g) zwischen dem Ausgangssignal des parametrischen Verstärkers und dem optischen Eingangssignal negativ ist.

**11.** Verfahren zur Erzeugung rauscharmen Lichts ohne Verschlechterung des Signal/Rausch-Verhältnisses, ausgehend von einem von einer Laserquelle stammenden optischen Eingangssignal, in welchem man:

- in das optische Eingangssignal eine nicht-lineare Phasenverschiebung ($\Delta\Phi_{NL}$) in Abhängigkeit von dessen Intensität einfügt, und man
- das phasenverschobene optische Signal durch Wechselwirkung mit einem Pumpstrahl in einem auf die Phase (2) empfindlichen parametrischen optischen Verstärker verstärkt,

  wobei der Intensitätsbereich ($I_s$) des optischen Eingangssignals und eine Phasenverschiebung ($\Phi_0$) zwischen dem Pumpstrahl und dem phasenverschobenen optischen Signal dergestalt sind, daß die Quanten-Fluktuationen des Ausgangssignals des parametrischen Verstärkers subpoissonisch sind.

**12.** Verfahren nach Anspruch 11, bei dem der Intensitätsbereich ($I_s$) und die Phasenverschiebung ($\Phi_0$) dergestalt sind, daß die differentielle Verstärkung (g) zwischen dem Ausgangssignal des parametrischen Verstärkers und dem optischen Eingangssignal nahe 0 liegt.

### Claims

**1.** Unit for processing an intensity-modulated optical input signal, without degradation of the signal-to-noise ratio, comprising, in series:

- phase-shifting means (1) arranged to receive the optical input signal and to apply to it a non-linear phase-shifting ($\Delta\Phi_{NL}$) dependent on its intensity ($I_s$); and
- means for optical parametric amplification (2) for applying to the phase-shifted optical signal produced by the phase-shifting means a phase-sensitive amplification by interaction with a pumping beam.

2. Unit according to claim 1, in which the phase-shifting means (1) and the optical parametric amplification means (2) are in two separate sections of the same monolithic element (8; 9; 10).

3. Unit according to claim 2, in which said monolithic element is an optical fibre (8).

4. Unit according to claim 2, in which said monolithic element is a crystal of non-linear material having at least one quasi-phase-matched region (11, 12; 14, 15).

5. Unit according to any one of claims 1 to 4, also comprising means for function selection by adjustment of the intensity range of the optical input signal.

6. Unit according to claim 5, in which said selection means comprise means (17) for superposing on the optical input signal a control beam with the same wavelength and with programmable intensity.

7. Unit according to any one of claims 1 to 6, also comprising means (6, 7) for function selection by adjustment of a phase shift ($\Phi_0$) between the pumping beam and the phase-shifted signal upon entry into the optical parametric amplification means (2).

8. Unit according to claim 7, in which said means of selection by adjustment of the phase shift comprise at least a moveable mirror (6) onto which is reflected the pumping beam, the optical input signal or the phase-shifted optical signal.

9. Process for amplification of an intensity-modulated optical input signal, without degradation of the signal-to-noise ratio, in which:

   - there is applied to the optical input signal a non-linear phase shift ($\Delta\Phi_{NL}$) dependent on its intensity; and
   - the phase-shifted optical signal is amplified by interaction with a pumping beam in a phase-sensitive optical parametric amplifier (2),

   the intensity range ($I_s$) of the optical input signal and a phase shift ($\Phi_0$) between the pumping beam and the phase-shifted optical signal being such that the differential gain (g) between the output signal of the parametric amplifier and the optical input signal is greater than 1.

10. Process for inversion of the modulation of an intensity-modulated optical input signal, without degradation of the signal-to-noise ratio, in which:

   - there is applied to the optical input signal a non-linear phase shift ($\Delta\Phi_{NL}$) dependent on its intensity; and
   - the phase-shifted optical signal is amplified by interaction with a pumping beam in a phase-sensitive optical parametric amplifier (2),

   the intensity range ($I_s$) of the optical input signal and a phase shift ($\Phi_0$) between the pumping beam and the phase-shifted optical signal being such that the differential gain (g) between the output signal of the parametric amplifier and the optical input signal is negative.

11. Process for the production of low-noise light without degradation of the signal-to-noise ratio from an optical input signal from a laser source in which:

   - there is applied to the optical input signal a non-linear phase shift ($\Delta\Phi_{NL}$) dependent on its intensity; and
   - the phase-shifted optical signal is amplified by interaction with a pumping beam in a phase-sensitive optical parametric amplifier (2),

   the intensity range ($I_S$) of the optical input signal and a phase shift ($\Phi_0$) between the pumping beam and the phase-shifted optical signal being such that the quantum fluctuations of the output signal of the parametric amplifier are sub-Poissonian.

12. Process according to claim 11, in which said intensity range ($I_s$) and said phase shift ($\Phi_0$) are such that the differential gain (g) between the output signal of the parametric amplifier and the optical input signal is close to 0.

*FIG.1*

4 → | LASER | pompe ⟶ 7
6

3
2
5

Signal
d'entrée | MILIEU A
EFFET KERR | | PSA | Signal
de sortie

1

*FIG.11*

g ($\Delta\Phi_{NL}$ =2 radians)

20
15
C
10
B
5 A

2
5
$\varphi_{P(radian)}$
1 3 4 6

−5
−10

*FIG.12*

FB($\Delta\Phi_{NL}$ =2 radians)

1

1 2 3 4 5 6 $\varphi_{P(radian)}$

−1 C

A
−2
−3
B
−4

Intensité à la sortie

*FIG.2*

g ( $\Phi_0 = 0$ )

*FIG.3*

FB ( $\Phi_0 = 0$ )

*FIG.4*

# FIG.5

Intensité à la sortie

I₁

I₂

Sortie
"1"— "0"  "1"— "0"

Signal "0"

Intensité
à l'entrée

Faisceau
contrôle

Signal "1"

# FIG.6

Sortie

Signal

17

1,2

18

Contrôle

I₂

I₁

Faisceau
d'annulation

## FIG.7

g ($\Delta\Phi_{NL} = 0,5$ radian)

C($G_0 = 8$)

B($G_0 = 4$)

A($G_0 = 2$)

$\varphi_{P(radian)}$

## FIG.9

g ($\Delta\Phi_{NL} = 1$ radian)

C

B

A

$\varphi_{P(radian)}$

## FIG.8

FB($\Delta\Phi_{NL} = 0,5$ radian)

A

C

B

$\varphi_{P(radian)}$

## FIG.10

FB($\Delta\Phi_{NL} = 1$ radian)

A

C

B

$\varphi_{P(radian)}$

## FIG.13

8    QPM

Signal
d'entrée    →         Signal
de sortie

pompe

## FIG.14

11 (QPM, Δk≈0)    12 (QPM, Δk≡0)

Signal
d'entrée    →         Signal
de sortie

pompe

9

## FIG.15

14 (QPM)    13    15 (QPM)

Signal
d'entrée    →         Signal
de sortie

pompe

10